# EUROPÄISCHE PATENTANMELDUNG

(11) **EP 2 468 809 A1**
(43) Veröffentlichungstag der Anmeldung: **27.06.2012**
(21) Anmeldenummer: 10196724.8
(22) Anmeldetag: 23.12.2010
(51) Int. Cl.: C08K 3/00

(54) **Zusammensetzungen**

(71) Anmelder: LANXESS Deutschland GmbH, 51369 Leverkusen (DE)
(72) Erfinder: Endtner, Jochen Dr., 50679 Köln (DE); Schäfer, Marcus, Dr., 51427 Bergisch Gladbach (DE); Bienmüller, Matthias, Dr., 47803 Krefeld (DE); Bredemann, Thorsten, 50226 Frechen (DE)

(57) **Zusammenfassung**

Die vorliegende Erfindung betrifft Zusammensetzungen auf Basis eines Thermoplasten enthaltend nicht-faserförmiges und nicht-geschäumtes gemahlenes Glas mit spezieller Teilchengrößenverteilung sowie die Herstellung und die Verwendung der erfindungsgemäßen Zusammensetzungen zur Herstellung von Erzeugnissen, bevorzugt Fasern, Folien und Formkörpern, jeglicher Art.

## Beschreibung

Die vorliegende Erfindung betrifft Zusammensetzungen auf Basis eines Thermoplasten enthaltend nicht-faserförmiges und nicht-geschäumtes gemahlenes Glas mit spezieller Teilchengrößenverteilung sowie die Herstellung und die Verwendung der erfindungsgemäßen Zusammensetzungen zur Herstellung von Erzeugnissen, bevorzugt Fasern, Folien und Formkörpern jeglicher Art.

Zur Modifizierung des Aufbereitungs-, Verarbeitungs- und Einsatzverhaltens sind Kunststoffe größtenteils mit Hilfsstoffen sowie mit Füll- und Verstärkungsstoffen versehen. Letztere verbessern Eigenschaften wie Steifigkeit, Festigkeit, Wärmestandfestigkeit, Maßhaltigkeit und verringern die thermische Ausdehnung.

Von besonderer Bedeutung für Zusammensetzungen in der Technik sind Füll- und Verstärkungsstoffe aus Mineralien oder Glas, insbesondere Borsilikatglas oder Silikatglas, das in Form von Glasfasern, hohlen oder gefüllten Glaskugeln oder auch in Form von Bläh- bzw. Schaumglas eingesetzt wird.

Aus DE 103 29 583 A1 und DE 103 34 875 A1 sind Werkstoffe für Formteile bekannt, die u.a. als Thermoplast Polyamid und als Füllstoff Glasmehl enthalten.

DE 10 2004 005 642 A1, DE 10 2004 017 350 A1 und DE 10 2004 038 162 A1 befassen sich alle mit Nahrungsmittelhüllen aus thermoplastischen Bestandteilen u.a. auf Basis von (Co)-Polyamid(en) mit u.a. Glasmehl als anorganische partikuläre Substanz die insbesondere in der Außenschicht der Hülle vorteilhaft zugegeben werden kann, wobei die mittlere Korngröße der anorganischen Partikel d50 größer als 10 µm, bevorzugt im Bereich von 15 bis 100 µm, besonders bevorzugt im Bereich von 20 bis 75 µm ist.

Schließlich offenbart DE 10 2009 022 893 A1 Pulverformulierungen mit Adsorbens-Partikeln auf Basis von Polyestern oder Polyamiden denen ebenfalls als Füllstoff Glasmehl zugesetzt werden kann.

Ein allgemein bekannter Nachteil bei Verwendung von Füll- und Verstärkungsstoffen liegt jedoch in der negativen Beeinträchtigung des Brand-, insbesondere des Selbstverlöschungsverhaltens, so dass zum Erreichen einer bestimmten Brandklassifizierung nach UL94 oder im Glühdrahttest nach IEC60695-2-12 (GWFI) in der Regel ein erhöhter Aufwand beim Einsatz von Flammschutzmitteln erforderlich ist.

Aufgabe der vorliegenden Erfindung war es daher, ein Füll- und Verstärkungsstoff für thermoplastische Frommassen zur Verfügung zu stellen, bei dem das Selbstverlöschungsverhalten bei vergleichbarer Flammschutzausrüstung weniger negativ beeinträchtigt wird, als bei üblichen glasbasierten Füll- und Verstärkungsstoffen.

Es wurde nun überraschend gefunden, dass Zusammensetzungen auf Basis eines Thermoplasten beim Einsatz von nicht-faserförmigem und nicht-geschäumtem, gemahlenem Glas in der unten näher beschriebenen Form trotz vergleichbarer Flammschutzausrüstung in ihrem Brandverhalten weniger negativ beeinträchtigt werden, als es bei üblichen glasbasierten Füll- und Verstärkungsstoffen der Fall wäre.

Gegenstand der Erfindung sind somit Zusammensetzungen, enthaltend
A) 5 bis 95 Gew.-%, bevorzugt 20 bis 90 Gew.-%, besonders bevorzugt 30 bis 80 Gew.-% eines Thermoplasten,
B) 5 bis 80 Gew.-%, bevorzugt 10 bis 60 Gew.-%, besonders bevorzugt 15 bis 50 Gew.-% eines nicht-faserförmigen und nicht-geschäumten gemahlenen Glases mit einem d90 von 10 bis 300 µm, bevorzugt 20 bis 150 µm, besonders bevorzugt 35 bis 80 µm.

Nicht-faserförmiges gemahlenes Glas bedeutet, dass das Glas bei Betrachtung unter dem Mikroskop keine Bruchstücke aufweist, die eine wohlgeformte zylindrische Form mit einem Durchmesser von 1 bis 30 µm aufweisen, wobei die zylindrische Form aus einem anderen Glasverarbeitungsschritt als Mahlen resultiert wie beispielsweise dem Abspinnen von flüssigem Glas und Verstrecken zu Glasfasern.

Nicht-geschäumtes gemahlenes Glas bedeutet, dass das Glas bei Betrachtung unter dem Mikroskop keine Bruchstücke aufweist, die eine flächige Struktur aufweisen, wobei diese flächige Struktur nicht aus dem Mahlprozess des Glases resultiert sondern ihren Ursprung aus Blähglas als Ausgangsmaterial hat wie beispielsweise gewölbte Umhüllungsflächen der Glasblasen.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

In einer alternativen, bevorzugten Ausführungsform können die Zusammensetzungen zusätzlich zu den Komponenten A) und B) noch C) 0,01 bis 60 Gew.-%, bevorzugt 1 bis 30 Gew.-%, besonders bevorzugt 2 bis 20 Gew.-% mindestens eines halogenhaltigen oder halogenfreien Flammschutzmittels enthalten.

In einer weiteren bevorzugten Ausführungsform können die Zusammensetzungen zusätzlich zu den Komponenten A) bis C) oder anstelle von C) noch D) 0,01 bis 50 Gew.-%, bevorzugt 1 bis 25 Gew.-%, besonders bevorzugt 2 bis 20 Gew.-% mindestens eines Elastomermodifikators enthalten.

In einer weiteren bevorzugten Ausführungsform können die Zusammensetzungen zusätzlich zu den Komponenten A) bis D) oder anstelle von C) und/oder D) noch E) 0,01 bis 5 Gew.-%, bevorzugt 0,05 bis 3 Gew.-%, besonders bevorzugt 0,1 bis 2 Gew.-% mindestens eines Gleit- und/oder Entformungsmittels enthalten.

In einer weiteren bevorzugten Ausführungsform können die Zusammensetzungen zusätzlich zu den Komponenten A) bis E) oder anstelle von C), D) und/oder E) noch die Komponente F) 0,01 bis 50 Gew.-%, bevorzugt 1 bis 30 Gew.-%, besonders bevorzugt 2 bis 15 Gew.-% mindestens eines Füllstoffs verschieden von Komponente B) enthalten.

In einer weiteren bevorzugten Ausführungsform können die Zusammensetzungen zusätzlich zu den Komponenten A) bis F) oder anstelle der Komponenten C), D), E) und/oder F) noch G) 0,01 bis 20 Gew.-%, bevorzugt 0,05 bis 10 Gew.-%, besonders bevorzugt 0,1 bis 5 Gew.-% jeweils bezogen auf die Gesamtzusammensetzung wenigstens ein weiteres Additiv enthalten.

In einer bevorzugten Ausführungsform ergänzt sich die Summe der Anteile der Komponenten jeweils zu 100 Gew.-%. Es ist auch möglich, dass die Zusammensetzung nur aus A) und B) besteht.

Als Komponente A) enthalten die Zusammensetzungen erfindungsgemäß mindestens eine thermoplastische Formmasse.

Bevorzugt handelt es sich bei den thermoplastischen Zusammensetzungen um thermoplastische Polyamide. Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A) einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren, bevorzugt Adipinsäure, 2,2,4- und 2,4,4-Trimethyladipinsäure, Azelainsäure, Sebazinsäure, Isophthalsäure, Terephthalsäure, aliphatische und/oder aromatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Phenylendiamine, Xylylendiamine, Aminocarbonsäuren, bevorzugt Aminocapronsäure oder die entsprechenden Lactame in Betracht. Copolyamide aus mehreren der genannten Monomeren sind eingeschlossen.

Besonders bevorzugt werden Caprolactame, ganz besonders bevorzugt wird ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Ganz besonders bevorzugt sind PA6 und PA66.

Die erfindungsgemäß hergestellten Polyamide können auch im Gemisch mit anderen Polyamiden und/oder weiteren Polymeren eingesetzt werden.

In einer alternativen Ausführungsform werden als Komponente A) thermoplastische Polyester, besonders bevorzugt teilaromatische Polyester eingesetzt.

Die erfindungsgemäß besonders bevorzugten teilaromatischen Polyester sind ausgewählt aus der Gruppe der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalate und der Polyethylenterephthalate, ganz besonders bevorzugt des Polybutylenterephthalats.

Unter teilaromatischen Polyestern versteht man Materialien, die neben aromatischen Molekülteilen auch aliphatische Molekülteile enthalten

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol 1,3 und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol 1,3 bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Pro¬pandiol-1,3,2-Ethylpropandiol-1,3, Neopentylglykol, Pentan-diol-1,5, Hexandiol-1.6, Cyclohexan-dimethanol-1,4, 3-Methylpentandiol-2, 4, 2-Methy-1-pentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE A 19 00 270 und der US-PS 3 692 744 beschrieben sind, verzweigt werden. Bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol 1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 cm³/g bis 1,0 cm³/g jeweils gemessen in Phenol/o-Dichlorbenzol (1:1 Gew.-Teile) bei 25°C.

Die erfindungsgemäß als Komponente A) einzusetzenden Polyester können auch im Gemisch mit anderen Polyestern und/oder weiteren Polymeren eingesetzt werden.

Den Polyestern können übliche Additive wie z.B. Entformungsmittel, Stabilisatoren und/oder Fließhilfsmittel in der Schmelze zugemischt oder auf der Oberfläche aufgebracht werden.

Ausgangsstoffe für die Thermoplasten der Komponente A) können synthetisch z.B. aus petrochemischen Rohstoffen und/oder über biochemische Prozesse aus nachwachsenden Rohstoffen hervorgegangen sein.

Als Komponente B) enthalten die Zusammensetzungen nicht-faserförmiges und nicht-geschäumtes gemahlenes Glas mit einer Teilchengrößenverteilung, die einen d90 von 10 bis 300 µm, bevorzugt 20 bis 150 µm, besonders bevorzugt 35 bis 80 µm aufweist. Hierbei wird bevorzugt solches nicht-faserförmiges und nicht-geschäumtes gemahlenes Glas eingesetzt, das weiterhin einen d10 von 0,6 bis 10 µm, bevorzugt 0,8 bis 6 µm, besonders bevorzugt 1,0 bis 5 µm aufweist. Dabei ist solches nicht-faserförmiges und nicht-geschäumtes gemahlenes Glas ganz besonders bevorzugt, das ferner einen d50 von 3 bis 50 µm, bevorzugt 5 bis 40 µm, besonders bevorzugt 7 bis 30 µm aufweist.

Bezüglich der d10, d50 und d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der
- d10-Wert: diejenige Partikelgröße ist, unterhalb derer 10 % der Partikelmenge liegen,
- d50-Wert: diejenige Partikelgröße ist, unterhalb derer 50 % der Partikelmenge liegen (Medianwert)
- und der d90-Wert: diejenige Partikelgröße ist, unterhalb derer 90 % der Partikelmenge liegen.

Bevorzugt weist ein derartiges nicht-faserförmiges und nicht-geschäumtes gemahlenes Glas eine mittlere Teilchengröße von 5 bis 50µm, insbesondere bevorzugt von 15 bis 30µm auf..

Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande).

Das nicht-geschäumte und nicht-faserförmige gemahlene Glas ergibt sich durch Mahlung von Glas mit einer Mühle, bevorzugt. einer Kugelmühle und besonders bevorzugt mit anschließender Sichtung bzw. Siebung. Als Ausgangsmaterial kommen alle geometrischen Formen von erstarrtem Glas in Betracht.

Bevorzugte Ausgangsmaterialien für die Vermahlung zu erfindungsgemäßem gemahlenem Glas sind auch Glasabfälle, wie sie z.B. bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall- und Bruchglas wie es z.B. bei der Herstellung von Fenster- oder Flaschenglas, sowie bei der Herstellung von glashaltigen Füll- und Verstärkungsstoffen z.B. in Form von sogenannten Schmelzekuchen anfallen kann. Das Glas kann gefärbt sein, wobei nicht-gefärbtes Glas als Ausgangsmaterial bevorzugt ist.

Als Ausgangsglas für die Vermahlung kommen prinzipiell alle Glasarten in Betracht wie sie z.B. in DIN1259-1 beschrieben sind. Bevorzugt sind Kalk-Natron-Glas, Floatglas, Quarzglas, Bleikristallglas, Borsilikatglas und E-Glas, wobei Kalk-Natron-Glas, Borsilikatglas und E-Glas besonders bevorzugt sind und E-Glas ganz besonders bevorzugt ist. Ebenfalls besonders bevorzugt sind Glasarten, bei denen der Alkalioxidgehalt, wie z.B. Na₂O oder K₂O kleiner oder gleich 2 Gew.-% bezogen auf alle Komponenten des Glases ist.

Das Ausgangsglas für die Vermahlung kann bereits mit Oberflächenmodifizierung oder Schlichte behandelt sein. Bevorzugte Oberflächenmodifikationen basieren hierbei auf Silanen und deren wässrige Hydrolysate bzw. Siloxanen, wobei Aminoalkyl-, Glycidether-, Alkenyl-, Acryloxyalkyl- und/oder Methacryloxyalkyl- funktionalisierte Trialkoxysilane und deren wässrige Hydrolysate sowie Kombinationen daraus besonders bevorzugt sind. Ganz besonders bevorzugt sind Oberflächenmodifizierungen auf Basis von Aminoalkyltrialkoxysilanen und deren wässrige Hydrolysate.

Ebenso kann das erfindungsgemäß einzusetzende nicht-geschäumte und nicht-faserförmige gemahlene Glas nach der Vermahlung mit Oberflächenmodifizierung oder Schlichte behandelt werden. Bevorzugte Oberflächenmodifikationen basieren hierbei auf Silanen und deren wässrige Hydrolysate bzw. Siloxanen, wobei Aminoalkyl-, Glycidether-, Alkenyl-, Acryloxyalkyl- und/oder Methacryloxyalkyl- funktionalisierte Trialkoxysilane sowie Kombinationen daraus besonders bevorzugt sind. Ganz besonders bevorzugt sind nachträglich Oberflächenmodifizierungen auf Basis von Aminoalkyltrialkoxysilanen und deren wässrige Hydrolysate.

Das erfindungsgemäß einzusetzende nicht-geschäumte und nicht-faserförmige gemahlene Glas kann bedingt durch die Verarbeitung zur erfindungsgemäßen Zusammensetzung bzw. zu Formkörpern aus der erfindungsgemäßen Zusammensetzung bzw. im Formkörper einen kleineren d90- bzw. d50-Wert bzw. d10-Wert bzw. eine kleinere mittlere Teilchengröße aufweisen, als die ursprünglich eingesetzten gemahlenen Partikel.

In einer bevorzugten Ausführungsform können die erfindungsgemäßen Zusammensetzungen als Komponente C) mindestens ein halogenhaltiges oder halogenfreies Flammschutzmittel enthalten. Als Flammschutzmittel kommen, bevorzugt phosphorhaltige Flammschutzmittel ausgewählt aus den Gruppen der mono- und oligomeren Phosphor- und Phosphonsäureester, Phosphonatamine, Phosphonate, Phosphinate, besonders bevorzugt Metall-dialkylphophinate, insbesondere Aluminium-tris[dialkylphosphinate] und Zink-bis[dialkylphosphinate], Phosphite, Hypophosphite, Phosphinoxide und Phosphazene in Frage. Hierbei sind Metalldialkylphosphinate bevorzugt, wobei Aluminium-tris[dialkylphosphinat] und Zink-bis[dialkylphosphinat] ganz besonders bevorzugt ist.

Weiterhin können stickstoffhaltige Flammschutzmittel oder Flammschutzmittelsynergisten einzeln oder im Gemisch eingesetzt werden. Hervorzuheben sind Melaminoxalat, Melaminphosphat prim., Melaminphosphat sec. und Melaminpyrophosphat sec., Umsetzungsprodukte des Melamins mit kondensierten Phosphorsäuren bzw. Umsetzungsprodukte von Kondensationsprodukten des Melamins mit Phosphorsäure oder kondensierten Phosphorsäuren, insbesondere Melaminpolyphosphat, sowie die Umsetzungsprodukte von Melamin und Polyphosphorsäure mit basischen Aluminium-, Magnesium- und/oder Zinkverbindungen, außerdem Melamincyanurat sowie Neopentylglycolborsäuremelamin. Ebenfalls geeignet sind Guanidinsalze wie Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können Kondensationsprodukte des Melamins wie z.B. Melem, Melam, Melon bzw. höherkondensierte Verbindungen dieses Typs und deren Umsetzungsprodukte mit kondensierten Phosphorsäuren Verwendung finden. Geeignet sind ebenfalls Tris(hydroxyethyl)isocyanurat oder dessen Umsetzungsprodukte mit Carbonsäuren, Benzoguanamin und dessen Addukte bzw. Salze sowie dessen am Stickstoff substituierten Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage.

Es können auch anorganische stickstoffhaltige Verbindungen, bevorzugt Ammoniumsalze, insbesondere Ammoniumpolyphosphat verwendet werden.

Bevorzugte stickstoffhaltige Flammschutzmittel sind Melamincyanurat und Melaminpolyphosphat, wobei Melamincyanurat ganz besonders bevorzugt ist. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur® MC 25 und Melapur MC50 (Fa. BASF, Ludwigshafen, Deutschland). Das verwendete Melamincyanurat besteht aus Partikeln mit mittleren Teilchendurchmessern von 0,1 µm bis 100 µm, vorzugsweise von 0,1 µm bis 30 µm, besonders bevorzugt 0,1 µm bis 7 µm und kann oberflächenbehandelt bzw. mit bekannten Mitteln beschichtet sein. Hierzu zählen u.a. organische Verbindungen, die in monomerer, oligomerer und/ oder polymerer Form auf das Melamincyanurat aufgebracht sein können. Beispielsweise können Beschichtungssysteme verwendet werden, die auf Silizium-haltigen Verbindungen wie organofunktionalisierten Silanen oder Organosiloxanen basieren. Beschichtungen mit anorganischen Komponenten sind ebenfalls möglich.

Als halogenhaltige Flammschutzmittel können handelsübliche organische Halogenverbindungen mit Synergisten einzeln oder im Gemisch eingesetzt werden. Hier seien insbesondere folgende bromierte und chlorierte Verbindungen beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol, Bis(pentabromphenyl)ethan. Als Synergisten sind z.B. Antimonverbindungen, insbesondere Natriumantimonat, Antimontrioxid und Antimonpentoxid geeignet.

Auch andere hier nicht speziell erwähnte Flammschutzmittel können zum Einsatz kommen. Hierzu zählen auch rein anorganische Phosphorverbindungen, insbesondere roter Phosphor oder Borphosphathydrat. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) eingesetzt werden. In Frage kommen ferner Flammschutzmittelsynergisten aus der Gruppe der sauerstoff stickstoff oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere geeignete Flammschutzadditive sind Kohlebildner, bevorzugt Phenol-Formaldehydharze, Polycarbonate, Polyphenylether, Polyimide, Polysulfone, Polyethersulfone, Polyphenylsulfide und Polyetherketone sowie Antitropfinittel wie z.B. Tetrafluorethylenpolymerisate.

Die Flammschutzmittel können in Reinform, sowie über Masterbatche oder Kompaktate zugesetzt werden.

Die in einer bevorzugten Ausführungsform der erfindungsgemäßen Zusammensetzungen als Komponente D) einzusetzenden Elastomermodifikatoren umfassenen u.a. ein oder mehrere Pfropfpolymerisate von
- D.1: 5 bis 95 Gew.-%, vorzugsweise 30 bis 90 Gew.-%, wenigstens eines Vinylmonomeren auf
- D.2: 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C.

Die Pfropfgrundlage D.2 hat im allgemeinen eine mittlere Teilchengröße (d50-Wert) von 0,05 bis 10 µm, vorzugsweise 0,1 bis 5 µm, besonders bevorzugt 0,2 bis 1 µm.

Monomere D.1 sind vorzugsweise Gemische aus
- D.1.1: 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C1-C8)-Alkylester (wie z.B. Methylmethacrylat, Ethylmethacrylat) und
- D.1.2: 1 bis 50 Gew.-% Vinylcyanide (ungesättigte Nitrile wie Acrylnitril und Methacrylnitril) und/oder (Meth)Acrylsäure-(C1-C8)-Alkylester (wie z.B. Methylmethacrylat, Glycidylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere D.1.1 sind ausgewählt aus mindestens einem der Monomere Styrol, α-Methylstyrol und Methylmethacrylat, bevorzugte Monomere D.1.2 sind ausgewählt aus mindestens einem der Monomere Acrylnitril, Maleinsäureanhydrid, Glycidylmethacrylat und Methylmethacrylat.

Besonders bevorzugte Monomere sind D.1.1 Styrol und D.1.2 Acrylnitril.

Für die in den Elastomermodifikatoren einzusetzenden Pfropfpolymerisate geeignete Pfropfgrundlagen D.2 sind beispielsweise Dienkautschuke, EP(D)M-Kautschuke, also solche auf Basis Ethylen/Propylen und gegebenenfalls Dien, ferner Acrylat-, Polyurethan-, Silikon-, Chloropren und Ethylen/Vinylacetat-Kautschuke.

Bevorzugte Pfropfgrundlagen D.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß D.1.1 und D.1.2), mit der Maßgabe, dass die Glasübergangstemperatur der Komponente D.2 bei <10°C, vorzugsweise bei <0°C, besonders bevorzugt bei <-10°C liegt.

Besonders bevorzugte Propfgrundlagen D.2 sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage D.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen D.2 die vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren. Zu den bevorzugten polymerisierbaren Acrylsäureestern gehören C1-C8-Alkylester, beispielsweise Methyl-, Ethyl-, Butyl-, n-Octyl- und 2-Ethylhexylester; Halogenalkylester, vorzugsweise Halogen-C1-C8-alkylester, wie Chlorethylacrylat, Glycidylester sowie Mischungen dieser Monomeren. Dabei sind Propfpolymerisate mit Butylacrylat als Kern und Methylmethacrylaten als Schale (z.B. Paraloid® EXL2300, Fa. Dow Coming Corporation, Midland Michigan, USA) besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2.

Bei cyclischen vernetzenden Monomeren mit mindestens 3 ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind bevorzugt Acrylnitril, Styrol, α-Methylstyrol, Acrylamide, Vinyl-C1-C6-alkylether, Methylmethacrylat, Glycidylmethacrylat, Butadien. Bevorzugte Acrylatkautschuke als Pfropfgrundlage D.2 sind Emulsionspolymerisate, die einen Gelgehalt von mindestens 60 Gew.-% aufweisen.

Weitere geeignete Pfropfgrundlagen gemäß D.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

Die in einer bevorzugten Ausführungsform der erfindungsgemäßen Zusammensetzungen als Komponente E) einzusetzenden Gleit- und/oder Entformungsmittel können beispielsweise langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse (Mischungen aus geradkettigen, gesättigten Carbonsäuren mit Kettenlängen von 28 bis 32 C-Atomen) sowie niedermolekulare Polyethylen- bzw. Polypropylenwachse sein. Erfindungsgemäß werden bevorzugt Gleit- und/oder Entformungsmittel aus der Gruppe der Ester, oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt, wobei Ethylen-bis-stearylamid, Calciumstearat und/oder Ethylenglycoldimontanat (z.B. Licowax^{®} E der Fa. Clariant, Muttenz, Basel) besonders bevorzugt ist und Ethylen-bis-stearylamid ganz besonders bevorzugt ist. Die hier genannten Alternativen kommen nur infrage, sofern sie nicht bereits als eine der Komponenten A) sowie C) bis G) eingesetzt werden.

Als Komponente F) können die Zusammensetzungen in einer weiteren bevorzugten Ausführungsform mindestens einen weiteren Füllstoff oder Verstärkungsstoff enthalten die von der Komponente B) verschieden sind.

Dabei können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, nanoskalige Mineralien, bevorzugt Montmorillonite oder Nano-Böhmit, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt, wobei Glasfasern ganz besonders bevorzugt sind.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff verschieden von Komponente B) kann in einer bevorzugten Ausführungsform oberflächenmodifiziert sein, beispielsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß ganz besonders bevorzugt als Komponente F) einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Faserförmige gemahlene Glasfasern können erhalten werden, wenn Endlosfasern oder geschnittene Glasfasern einem zusätzlichen Mahlprozess, z.B. in einer Kugelmühle unterworfen werden. Die Fasern können mit einem geeigneten Schlichtesystem und einem Haftvermittler bzw. Haftvermittlersystem, bevorzugt auf Silanbasis, ausgerüstet sein.

Besonders bevorzugte Haftvermittler auf Silanbasis für die Vorbehandlung sind Silanverbindungen der allgemeine Formel (I) 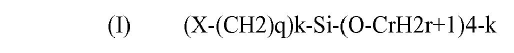 worin
X für NH2-, HO- oder 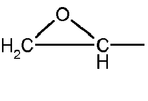 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.
Die teilchenförmigen Füllstoffe können bedingt durch die Verarbeitung zur Zusammensetzung bzw. Formkörper aus der Zusammensetzung bzw. im Formkörper einen kleineren d97- bzw. d50-Wert aufweisen, als die ursprünglich eingesetzten Füllstoffe. Die Glasfasern können bedingt durch die Verarbeitung zur Zusammensetzung bzw. Formkörper aus der Zusammensetzung bzw. im Formkörper kürzere Längenverteilungen als ursprünglich eingesetzt aufweisen. Bevorzugt werden Füll- und Verstärkungsstoffe verschieden von B) in Mengen von 1 bis 30 Gew.-%, besonders bevorzugt von 2 bis 15 Gew.-% und ganz besonders bevorzugt von 3 bis 7 Gew.-% jeweils bezogen auf die Gesamtformmasse eingesetzt.

Als Komponente G) können die erfindungsgemäßen Zusammensetzungen zusätzlich zu den Komponente C) bis F) oder anstelle von C), D), E) und/ oder F) noch weitere Additive enthalten. Zu den Additiven im Sinne der vorliegenden Erfindung gehören UV-Stabilisatoren, Gammastrahlenstabilisatoren, Hydrolysestabilisatoren, Thermostabilisatoren, Antistatika, Emulgatoren, Nukleierungsmittel, Weichmacher, Verarbeitungshilfsmittel, Schlagzähmodifikatoren verschieden von Komponente D), Farbstoffe und Pigmente. Die Additive können alleine oder in Mischung bzw. in Form von Masterbatchen eingesetzt werden.

Als UV-Stabilisatoren seien verschiedene substituierte Resorcine, Salicylate, Benzotriazole und Benzophenone genannt.

Als Farbmittel können anorganische Pigmente, wie Titandioxid, Ultramarinblau, Eisenoxid, Zinksulfid und Ruß, weiterhin organische Pigmente, bevorzugt Phthalocyanine, Chinacridone, Perylene sowie Farbstoffe, bevorzugt Nigrosin und Anthrachinone eingesetzt werden.

Als Thermostabilisator können sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt werden. Bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamine (z.B. Irganox® 1098 der Fa. BASF SE, Ludwigshafen. Deutschland) besonders bevorzugt ist.

Als Nukleierungsmittel können bevorzugt Natrium- oder Calciumphenylphosphinat, Aluminiumoxid oder Siliziumdioxid sowie besonders bevorzugt Talkum eingesetzt werden, wobei diese Aufzählung nicht abschließend ist.

Als Fließhilfsmittel können bevorzugt Copolymerisate aus mindestens einem α-Olefin mit mindestens einem Methacrylsäurester oder Acrylsäureester eines aliphatischen Alkohols eingesetzt werden. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen.

Bevorzugt seien als Weichmacher Phthalsäuredioctylester, Phthalsäuredibenzylester, Phthalsäurebutylbenzylester, Kohlenwasserstofföle, N-(n-Butyl)benzolsulfonamid genannt.

Die vorliegende Erfindung betrifft aber auch Erzeugnisse, bevorzugt Fasern, Folien oder Formkörper, erhältlich aus den erfindungsgemäß beschriebenen Zusammensetzungen durch Spritzguss oder Extrusion.

Gegenstand der vorliegenden Anmeldung ist auch die Verwendung der erfindungsgemäßen Zusammensetzungen im Spritzguss, einschließlich der Sonderverfahren GIT (Gasinjektionstechnik), WIT (Wasserinjektionstechnik) und PIT (Projektilinjektionstechnik), im Extrusionsverfahren in der Profil-Extrusion, im Blasformen, besonders bevorzugt Standard-Extrusionsblasformen, 3D-Extrusionsblasformverfahren oder Saugblasformverfahren zur Herstellung von Erzeugnissen.

Erfindungsgemäße Verfahren zur Herstellung von Erzeugnissen durch Extrusion oder Spritzguß arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierter Teilfüllung der Gussform. Im verfahrensspezifischen Arbeitsschritt wird ein Prozessmedium über einen so genannten Injektor in die schmelzeflüssig Seele des Vorspritzlings zur Hohlraumbildung injiziert. Dabei handelt es sich um Gas - in der Regel Stickstoff - im Fall der GIT und Wasser bei der. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventionelle Einschneckenextruder, förderwirksame Einschneckenextruder, gegenläufige Doppelschneckenextruder und gleichläufige Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdorns oder einer (ggf. mehrer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krümmungen herstellen. Allerdings werden dann Erzeugnisse erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch"gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Die erfindungsgemäß herzustellenden Erzeugnisse finden Anwendung in der Kraftfahrzeug-, Elektro-, Elektronik-, Telekommunikations-, Computerindustrie, im Sport, in der Medizin, im Haushalt, in der Bau- oder in der Unterhaltungsindustrie.

Zum Nachweis der erfindungemäß beschriebenen Verbesserungen bei Flammwidrigkeit und Mechanik wurden zunächst durch Compoundierung entsprechende Kunststoff-Zusammensetzungen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen zwischen 250 und 310°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulates bei Temperaturen zwischen 250 und 300°C zu Normprüfkörpern für die jeweiligen Prüfungen.

Die Flammwidrigkeit der Zusammensetzungen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Dicke der Normprüfkörper betrug 0,75mm.

Die Glühdrahtbeständigkeit wurde anhand der Glühdrahtprüfung GWFI (Glow-Wire Flammability-Index) nach IEC 60695-2-12 an Rundplatten mit 0,75 und/oder 1,5mm Dicke bestimmt.

Die Partikelgrößenbestimmung der gemahlenen Glaspartikel erfolgte mit einem laseroptischen Verfahren ("Eye Tech") der Fa. Ankersmid Ltd, Oosterhout, Niederlande in einer Zelle des Typs "ACM-104 Liquid Flow (4x4mm)". Die Messzeit betrug etwa 900sec. Die Auswertung bezieht sich auf die Oberfläche der Glaspartiklel.

In den Versuchen wurden verwendet:
Komponente A1: Polyamid 6 (Durethan^{®} B29, Fa. Lanxess Deutschland GmbH, Leverkusen, Deutschland)
Komponente A2: (Durethan^{®} B26, Fa. Lanxess Deutschland GmbH, Leverkusen, Deutschland)
Komponente B: Nicht-faserförmiges und nicht-geschäumtes gemahlenes Glas (Recycling Glas auf Basis E-Glas mit ca. 0,1 Gew.-% Schlichte und einem d90 von 54µm, einem d50 von 14µm, einem d10 von 2,4µm und einer mittleren Teilchengröße von 21µm, jeweils bezogen auf die Teilchenoberfläche, Fa. Lanxess Deutschland GmbH, Leverkusen, Deutschland)
Komponente C: Melamincyanurat, (Melapur^{®} MC25, der Fa. BASF, Ludwigshafen, Deutschland)
Komponente D: Schlagzähmodifikator (Paraloid^{®} EXL-2300, Fa. Dow Corning Corporation, Midland Michigan, USA)
Komponente E: Entformer (N,N'-Ethylen-bis-stearylamid bzw. Licowax^{®} E der Fa. Clariant GmbH, Muttenz, Schweiz)
Komponente F1: Schnittglasfaser CS 7928 beschlichtet, Fa. Lanxess Deutschland GmbH, Leverkusen, Deutschland)
Komponente F2: gemahlene Schnittglasfaser MF 7982 beschlichtet, Fa. Lanxess Deutschland GmbH, Leverkusen, Deutschland)
Komponente F3: Glaskugeln (Aminosilanschlichte 0,2 Gew.-%) mit einer typischen Partikelgröße im Bereich von 35 µm (Spheriglass^{®} Potters 3000 CP 0302 von Potters Industries Inc., Valley Forge, USA)
Komponente F4: Blähglasgranulat (Poraver^{®} 0,04, Fa. Bennert Poraver GmbH, Postbauer Heng, Deutschland)
Komponente F5: Mineral Talkum (Luzenac A60H, Fa. Luzenac Europe SAS, Toulouse, Frankreich)
Komponente G1 : Thermostabilisator (Irganox 1098, Fa. BASF, Ludwigshafen, Deutschland)
Komponente G2: Nukleierungsmittel (Talkum)

Die Komponeten E und G stimmen in Art und Menge in den jeweiligen Beispielen und Vergleichsbeispielen überein.

**Tabelle 1 Rezepturen ohne Flammschutzmittel**

| Komponente | | **1** | **C1.1** | **C1.2** | **2** | **C2** | **3** | **C3** |
|---|---|---|---|---|---|---|---|---|
| A1 | [%] | 69,82 | 69,82 | 69,82 | 64,82 | 64,82 | 69,82 | 69,82 |
| B | [%] | 30 | | | 30 | | 18 | |
| F1 | [%] | | 30 | | | 30 | 12 | 12 |
| F2 | [%] | | | 30 | | | | |
| F3 | [%] | | | | | | | 18 |
| D | [%] | | | | 5 | 5 | | |
| E | [%] | 0,16 | 0,16 | 0,16 | 0,16 | 0,16 | 0,16 | 0,16 |
| G2 | [%] | 0,02 | 0,02 | 0,02 | 0,02 | 0,02 | 0,02 | 0,02 |
| GWFI (1,5mm) | °C | 930 | 700 | 700 | 750 | 650 | 700 | 650 |

| | | | | | | | | |
|---|---|---|---|---|---|---|---|---|
| Angaben der Komponenten in Gew.-% bezogen auf die Gesamtformmasse | | | | | | | | |

**Tabelle 2 Rezepturen mit Flammschutzmittel**

| | | **4** | **C4.1** | **C4.2** | **C4.3** | **C4.4** | **5** | **C5** | **6** | **C6** |
|---|---|---|---|---|---|---|---|---|---|---|
| A2 | [%] | 61,2 | 61,2 | 61,2 | 61,2 | 61,2 | 71,7 | 71,7 | 61,2 | 61,2 |
| B | [%] | 30 | | | | | 20 | | 28 | |
| F1 | [%] | | 30 | | | | | | | 28 |
| F2 | [%] | | | 30 | | | | | 2 | 2 |
| F4 | [%] | | | | 30 | | | 20 | | |
| F5 | [%] | | | | | 30 | | | | |
| C | [%] | 8 | 8 | 8 | 8 | 8 | 7,5 | 7,5 | 8 | 8 |
| E | [%] | 0,3 | 0,3 | 0,3 | 0,3 | 0,3 | 0,3 | 0,3 | 0,3 | 0,3 |
| G1 | [%] | 0,5 | 0,5 | 0,5 | 0,5 | 0,5 | 0,5 | 0,5 | 0,5 | 0,5 |
| GWFI (0,75mm) | °C | 960 | <960 | 960 | <960 | <900 | - | - | 960 | <960 |
| UL94 (0,75mm) | Klasse | V0 | V2 | V2 | V2 | V2 | V0 | V2 | V0 | V2 |

| | | | | | | | | | | |
|---|---|---|---|---|---|---|---|---|---|---|
| Angaben der Komponenten in Gew.-% bezogen auf die Gesamtformmasse | | | | | | | | | | |

Die Beispiele zeigen, dass die erfindungsgemäßen Rezepturen 1 bis 6 enthaltend Komponente B gegenüber den Vergleichsbeispielen C1 bis C6 deutliche Vorteile im Brandverhalten zeigen.

## Patentansprüche

1. Zusammensetzungen, enthaltend
A) 5 bis 95 Gew.-%, bevorzugt 20 bis 90 Gew.-%, besonders bevorzugt 30 bis 80 Gew.-% eines Thermoplasten,
B) 5 bis 80 Gew.-%, bevorzugt 10 bis 60 Gew.-% eines nicht-faserförmigen und nicht-geschäumten gemahlenen Glases mit einem d90 von 10 bis 300.

2. Zusammensetzungen gemäß Anspruch 1, **dadurch gekennzeichnet, dass** nicht-faserförmiges gemahlenes Glas bedeutet, dass das Glas bei Betrachtung unter dem Mikroskop keine Bruchstücke aufweist, die eine wohlgeformte zylindrische Form mit einem Durchmesser von 1 bis 30 µ aufweisen, wobei die zylindrische Form aus einem anderen Glasverarbeitungsschritt als Mahlen resultiert und nicht-geschäumtes gemahlenes Glas bedeutet, dass das Glas bei Betrachtung unter dem Mikroskop keine Bruchstücke aufweist, die eine flächige Struktur aufweisen, wobei die flächige Struktur nicht aus dem Mahlprozess des Glases resultiert sondern ihren Ursprung aus Blähglas als Ausgangsmaterial hat.

3. Zusammensetzungen gemäß der Ansprüche 1 oder 2, **dadurch gekennzeichnet, dass** diese zusätzlich zu A) und B) noch C) 0 , 01 bis 60 Gew.-% mindestens eines halogenhaltigen oder halogenfreien Flammschutzmittels enthalten.

4. Zusammensetzungen gemäß der Ansprüche 1 bis 3, **dadurch gekennzeichnet, dass** diese zusätzlich zur Komponente C) oder anstelle von C) noch D) 0,01 bis 50 Gew.-% mindestens eines Elastomermodifikators enthalten.

5. Zusammensetzungen gemäß der Ansprüche 1 bis 4, **dadurch gekennzeichnet, dass** diese zusätzlich zu den Komponenten A) bis D) oder anstelle von C) und/oder D) noch E) 0,01 bis 5 Gew.-%, mindestens eines Gleit- und/oder Entformungsmittels enthalten.

6. Zusammensetzungen gemäß der Ansprüche 1 bis 5, **dadurch gekennzeichnet, dass** diese zusätzlich zu den Komponenten A) bis E) oder anstelle von C), D) und/oder E) noch die Komponente F) 0,01 bis 50 Gew.-% mindestens eines Füllstoffs verschieden von Komponente B) enthalten.

7. Zusammensetzungen gemäß der Ansprüche 1 bis 6, **dadurch gekennzeichnet, dass** diese zusätzlich zu den Komponenten A) bis F) oder anstelle der Komponenten C), D), E) und/oder F) noch G) 0,01 bis 20 Gew.-% wenigstens ein weiteres Additiv enthalten.

8. Zusammensetzungen gemäß der Ansprüche 1 bis 7, **dadurch gekennzeichnet, dass** diese als Komponente A) Polyamid oder Polyester enthalten.

9. Erzeugnisse, bevorzugt Fasern, Folien oder Formkörper, erhältlich aus den Zusammensetzungen gemäß der Ansprüche 1 bis 8 durch Spritzguss oder Extrusion.

10. Verwendung der Erzeugnisse gemäß Anspruch 9 in der Kraftfahrzeug-, Elektro-, Elektronik-, Telekommunikations-, Computerindustrie, im Sport, in der Medizin, im Haushalt, in der Bau- oder in der Unterhaltungsindustrie.
